# EUROPEAN PATENT SPECIFICATION

(11) **EP 2 410 151 B1**
(45) Date of publication and mention of the grant of the patent: **22.08.2018**
(21) Application number: 10792174.4
(22) Date of filing: 24.06.2010
(51) Int. Cl.: F01K 23/10, F01N 5/02, F01N 5/04, F02G 5/02, F01K 23/06, F02B 41/10, F02D 41/02, F01K 23/16, F02B 37/00, F02D 41/00

(54) **ENGINE EXHAUST ENERGY RECOVERY DEVICE**
VORRICHTUNG ZUR RÜCKGEWINNUNG DER ABGASENERGIE EINES MOTORS
DISPOSITIF DE RÉCUPÉRATION DE L'ÉNERGIE DES GAZ D'ÉCHAPPEMENT

(30) Priority: 25.06.2009 JP 2009150571
(43) Date of publication of application: 25.01.2012
(60) Divisional application: 16155871.3
(73) Proprietor: Mitsubishi Heavy Industries, Ltd., Tokyo 108-8215 (JP); Japan Engine Corporation, Futami-Cho, Akashi-shi Hyogo 674-0093 (JP)
(72) Inventor: MURATA, Satoru, Tokyo 108-8215 (JP); MIYANAGI, Akihiro, Tokyo 108-8215 (JP); HOSOKAWA, Naofumi, Tokyo 108-8215 (JP); HIGUCHI, Jun, Tokyo 108-8215 (JP); ICHIKI, Yoshihiro, Tokyo 108-8215 (JP); SHIRAISHI, Keiichi, Tokyo 108-8215 (JP)
(74) Representative: Hoffmann Eitle
(86) International application number: PCT/JP2010/060781
(87) International publication number: WO 2010/150856

(56) References cited:
- EP-A1- 1 645 735
- EP-A2- 0 685 638
- JP-A- 1 178 752
- JP-A- 11 257 108
- JP-A- 2003 343 272
- JP-A- 2006 274 833
- JP-A- 2006 274 833
- JP-A- 2008 075 574
- JP-A- 2008 185 009

## Description

### Field of the Invention

The present invention relates to an exhaust gas energy recovery device by which a part of the energy included in the exhaust gas discharged from an engine body such as a diesel engine for marine use or land generator use is recovered as power output.

### Background of the Invention

As for the exhaust gas energy recovery device that recovers the exhaust gas energy included in the exhaust gas (combustion gas) as power output, JP1988-186916 discloses, for instance, the turbocharger and the power turbine.

EP 1 645 735 A1 describes, with reference to Fig. 1 thereof, an internal combustion engine comprising a plurality of cylinders, each cylinder comprising at least one first and one second exhaust port with associated first and second exhaust valves for opening and closing said exhaust ports; at least one first and one second exhaust manifold, the first exhaust manifold being flow-connected to the respective first exhaust ports and the second exhaust manifold being flow-connected to the respective second exhaust ports; a turbo unit for supercharging the charge air delivered to the cylinders, comprising at least one first and one second exhaust gas turbine, the first exhaust gas turbine being flow connected to the first exhaust manifold and the second exhaust gas turbine being flow-connected to the second exhaust manifold; an exhaust gas chamber designed to flow-connect the first and the second exhaust manifold upstream of the exhaust gas turbines. From the exhaust gas chamber an exhaust port bypasses the first and the second exhaust gas turbine and leads to an exhaust passage arranged downstream of the first and the second exhaust gas turbine. A control valve arranged in the exhaust port is designed, under certain engine operating conditions, to open and close in order to open up directly to the exhaust passage, thereby bypassing both the first and the second exhaust gas turbine. This means that the exhaust gas chamber upstream of the turbines can be flow-connected to the exhaust passage downstream of the turbines if the regulating valve is set to an open position. In this way the turbines can be bypassed, for example in the event of an excessively high exhaust gas pressure prevailing in the turbines. In a particular engine speed range, the first exhaust valves are kept in the active position and the second exhaust valves in the active position, both the throttle valve and the regulating valve are kept open (to what extent varies as a function of the prevailing engine speed and the load). This means that the exhaust gases produced in the cylinders leave the cylinders via the first and the second exhaust ports, and are led onward through the first and the second exhaust manifold, respectively for expansion over the first and second exhaust gas turbine respectively.

### SUMMARY OF THE INVENTION

In the diesel engine provided with an exhaust gas energy recovery device in which the exhaust gas (combustion gas) discharged from the engine body is mainly guided into a turbocharger and partly fed to a power turbine, a part of the exhaust gas energy is used for driving not the turbocharger but the power turbine. Therefore, according to an engine operating condition, the efficiency of the turbocharger decreases and the scavenging air pressure (charging air pressure) regarding the air into the engine body from the turbocharger becomes in shortage. As a result, the combustion efficiency of the engine decreases and the fuel consumption rate increases.

Contrary to the general aspect as described above, in recent years, it becomes possible that, even when a larger quantity of the exhaust gas discharged from the engine is fed to the power turbine in comparison with the conventional quantity, the turbocharger is able to supply the scavenging (charging) air of sufficient pressure to the engine body, owing to the improvement (as a general trend regarding the research and development of turbochargers) of the turbocharger performance in recent years. It is hereby noted that the turbocharger performance improvement has been brought, for instance, by the improved blade profile regarding the blades of the turbine, the improved impeller profile regarding the impellers of the compressor driven by the driving power generated by the turbine, the reduced clearance between the blades and the housing thereof, the reduced clearance between the impellers and the housing thereof, and the reduced driving resistance in the turbine and the compressor.

In this way, during the high load operation of the diesel engine such as disclosed in Patent Reference 1, when the opening of the by-pass valve is reduced (namely, the power output of the power turbine is reduced), then the exhaust gas that is fed toward the power turbine is supplied to the turbine (exhaust gas turbine) of the turbocharger. Thus, the driving power of the exhaust gas turbine as well as the speed of the exhaust gas turbine increases; and speed of the compressor driven by the exhaust gas turbine also increases.

Consequently, the pressure (the scavenging air pressure: the charging air pressure) of the compressed air supplied to the diesel engine from the compressor exceeds the allowable operation pressure limit inherent to the engine. Thereby, the scavenging air pressure is checked so as to not exceed the allowable limit; however, the check is performed only from an engine safety standpoint. Thus, in a case where the opening of the by-pass valve is reduced, the operation point of the engine goes away from the optimal operation point; and, the increased efficiency of the turbocharger does not translate into the increased thermal efficiency of the engine.

The present invention provides an engine exhaust gas energy recovery device according to Claim 1. Optional features are set out in the remaining claims.

### BRIEF DESCRIPTION OF THE DRAWINGS

Fig. 1 shows an outline configuration of an exhaust gas energy recovery device provided according to a first embodiment of the present invention;
Fig. 2 shows an example of the control database to determine the optimal operating conditions of the exhaust gas energy recovery device described herein;
Fig. 3 shows a control block diagram according to the first embodiment of the present invention;
Fig. 4 shows a control flow chart according to the first embodiment of the present invention;
Fig. 5 shows a control block diagram according to a second embodiment of the present invention;
Fig. 6 shows a control flow chart according to the second embodiment of the present invention;
Fig. 7 shows a control block diagram according to a third embodiment of the present invention;
Fig. 8 shows a control flow chart according to the third embodiment of the present invention;
Fig. 9 shows a control flow chart according to a background example.

### DETAILED DESCRIPTION OF EMBODIMENTS AND BACKGROUND EXAMPLES

There is described in the following an engine exhaust gas recovery device in which the flow rate of the exhaust gas that bypasses the turbocharger as well as the power turbine is adjusted so that the optimal scavenging (charging) air pressure is achieved and the optimal operation conditions are continuously achieved, by use of a control device in which the calculation formulae or the databases are incorporated and the optimal scavenging air pressure is computed based on the formulae or the databases to obtain the optimal engine performance (the fuel consumption rate), the formulae or the databases being related to the engine load or the engine speed.

There is also described an engine exhaust gas recovery device in which the optimal operating conditions of the engine are maintained even when the pressure of the compression air compressed in the cylinders of the engine decreases due to the aged deterioration.

More particularly, there is described in the following an engine exhaust gas energy recovery device comprising:
an exhaust gas turbocharger comprising a turbine and a compressor, the turbine being driven by the exhaust gas discharged from the engine, the compressor compression-transporting outside air to the engine body by driving the turbine;
a first exhaust pipe connecting the exhaust gas turbocharger to an exhaust manifold of the engine;
a power turbine being driven by the exhaust gas;
a second exhaust pipe connecting the exhaust manifold to the power turbine;
a gas flow-rate control valve being provided on the way of the second exhaust pipe so as to control the flow-rate of the exhaust gas fed to the power turbine;
a bypass pipe being connected to the second exhaust pipe which is provided on the upstream side of the gas-flow rate control valve so as to bypass the power turbine;
an exhaust gas bypass control valve which is provided on the way of the bypass pipe and which controls the flow-rate of the exhaust gas bypassing the power turbine;
an engine load detecting sensor which detects the load of the engine;
an engine speed detecting sensor which detects the speed of the engine;
a scavenging (charging) air pressure detecting sensor which detects the scavenging (charging) air pressure of the engine; and
a control device which comprises a database computing the optimal scavenging air pressure at which an fuel consumption rate of the engine becomes the optimum operating state on the basis of each value detected by the engine load detecting sensor and the engine speed detecting sensor,
wherein
the control device controls the exhaust gas bypass control valve so that the scavenging (charging) air pressure agrees with the computed optimal scavenging (charging) air pressure.

According to the engine exhaust gas energy recovery device described above, the control device computes the optimal scavenging air pressure, based on the values detected by the engine load detecting sensor and the engine speed detecting sensor, so that the engine is placed under the optimal operating condition; the control device controls the exhaust gas bypass control valve provided on the way of the bypass pipe so that the scavenging air pressure agrees with the computed optimal scavenging air pressure. In this way, the flow rate of the exhaust gas passing through the bypass pipe, and the optimal operating condition of the engine is continuously maintained. Thus, the fuel consumption rate can be restrained, and the running cost of the engine can be reduced; as a result, desirable effects on environmental improvement can be achieved.

There is also described engine exhaust gas energy recovery device as set out in above, wherein the control device further comprises a map which computes the optimal injection timing of a fuel injection device when the fuel consumption rate of the engine becomes the optimum operating state on the basis of each value detected by the engine load detecting sensor and the engine speed detecting sensor,
and controls a injection timing of the fuel injection device with reference to the map.

In response to the change of the load of the driven device coupled to the power turbine, the flow rate of the exhaust gas fed to the power turbine changes; thus, the flow rate of the exhaust gas passing through the exhaust gas turbocharger also changes. Hence, the scavenging air pressure of the engine changes. In order to compensate the change of scavenging air pressure, by adjusting the fuel injection timing in addition to the scavenging air pressure, the combustion condition (including the commencement of combustion) in the engine cylinder can be controlled so that the fuel consumption rate is always of the optimal engine operating condition. Thus, the running cost of the engine can be reduced; as a result, desirable effects on environmental improvement can be achieved.

There is also described an engine exhaust gas energy recovery device as set out above, wherein the control device further comprises a map which computes an closing timing of the exhaust valve when the fuel consumption rate of the engine becomes the optimum operating state on the basis of each value detected by the engine load detecting sensor and the engine speed detecting sensor,
and controls a closing timing of the exhaust valve
with reference to the map.

The compression pressure of the air compressed inside of the cylinder is determined by the scavenging air pressure (the charging air pressure) and the exhaust (gas) valve closing timing. By increasing the scavenging air pressure and delaying the exhaust (gas) valve closing timing at the same time, the compression work during the upward movement of the piston can be reduced, and the fuel consumption rate can be reduced. Further, since the temperature of the air (or gas) inside the cylinder before the commencement of combustion (in a time point near to top dead center) can be reduced, the formation of NOx (nitrogen oxide) can be constrained. Thus, environmental load can be reduced.

There is also described an engine exhaust gas energy recovery device as set out above,
the engine comprising either an operating oil accumulation room for an fuel-pump operating oil or a fuel accumulation room for a common-rail type fuel pump,
the control device further comprising a map which computes either an operating oil accumulation pressure or an fuel accumulation pressure when a fuel consumption rate of the engine becomes the optimum operating state on the basis of each value detected by the engine load detecting sensor and the engine speed detecting sensor,
wherein the control device controls either the
operating oil accumulation pressure or the fuel accumulation pressure with reference to the map.

The operating oil accumulation pressure or the fuel oil accumulation pressure has an effect directly on the fuel injection pressure. Hence, by maintaining the fuel injection pressure at a high level, the fine atomization of the fuel during the injection duration in the cylinder can be achieved; the mixing of the atomized fuel and the air in the cylinder can be promoted so that the optimal combustion state is achieved; the fuel consumption rate can be reduced thanks to the improved thermal efficiency. Thus, the improved combustion brings about desirable results in cleaning the emissions of the engine.

There is also described an engine exhaust gas energy recovery device as set out above, wherein the control device feedbacks an opening of the exhaust gas bypass control valve so that the opening of the exhaust gas bypass control valve agrees with a target bypass control valve opening which is calculated in a manner that a fuel consumption rate becomes the optimum operating state on the basis of a signal given by an exhaust gas bypass control valve opening detecting sensor which detects an opening of the exhaust gas bypass control valve.

In continuously detecting and controlling the opening of the exhaust gas bypass control valve, the flow rate of the exhaust gas fed to the exhaust gas turbocharger can be adjusted. Thus, the pressure of the scavenging air delivered to the engine body can be adjusted so that the deviation of the actual scavenging air pressure from the target (ordered) pressure value can be corrected, the deviation being attributable to aged deterioration. In this way, the engine operating condition can be prevented from deviating from the optimal operating condition.

There is also described an engine exhaust gas energy recovery device, wherein the control device computes a cylinder compression pressure Pcomp and a maximum pressure Pmax on the basis of a cylinder pressure detected by a cylinder pressure detecting sensor;
the control device preliminarily sets, as a map, an optimal compression pressure Pcomp0 and an optimal maximum pressure PmaxO so that a fuel consumption rate agrees with the optimal value with regard to the engine load and the engine speed;
the control device controls a fuel injection timing so that the computed maximum pressure Pmax agrees with the value obtained from the map,
and the control device controls the exhaust valve closing timing so that the computed compression pressure Pcomp agrees with the value obtained from the map.

One of the conditions under which the optimal engine operating state is maintained is the fuel combustion condition; namely, the fuel combustion state has an effect on the optimal engine operating condition. The fuel combustion state is influenced by the factors such as the engine speed, the engine scavenging air pressure (the engine charging air pressure), the used fuel properties (e.g. cetane number, viscosity, contained impurities) and so on. Thus, the combustion state changes in response to the fuel ignition timing and the fuel atomization level. Accordingly, the fuel combustion state can be judged by directly detecting the cylinder pressure (the compression pressure Pcomp and the maximum firing pressure Pmax).

Therefore, when the exhaust gas bypass control valve is controlled so that the engine is operated under the condition that the fuel consumption rate in the map corresponding to the engine load, the scavenging air pressure can be controlled; and, the engine operating condition under which the fuel consumption is optimal can be maintained.

Further, there is described an engine exhaust gas energy recovery device comprising:
an exhaust gas turbocharger comprising a turbine and a compressor, the turbine being driven by the exhaust gas discharged from the engine, the compressor compression-transporting outside air to the engine body by driving the turbine;
a first exhaust pipe connecting the exhaust gas turbocharger to an exhaust manifold of the engine;
a power turbine being driven by the exhaust gas;
a second exhaust pipe connecting the exhaust manifold to the power turbine;
a gas flow-rate control valve being provided on the way of the second exhaust pipe so as to control the flow-rate of the exhaust gas fed to the power turbine;
a bypass pipe being connected to the second exhaust pipe which is provided on the upstream side of the gas-flow rate control valve so as to bypass the power turbine;
an exhaust gas bypass control valve which is provided on the way of the bypass pipe and which controls the flow-rate of the exhaust gas bypassing the power turbine;
an engine load detecting sensor which detects the load of the engine;
an engine speed detecting sensor which detects the speed of the engine;
a cylinder pressure detecting sensor which detects a cylinder pressure of the engine;
and a control device which comprises a database computing the optimal compression pressure and the optimal cylinder maximum pressure at which a fuel consumption rate of the engine becomes the optimum operating state on the basis of each value detected by the engine load detecting sensor and the engine speed detecting sensor,
wherein the control device controls an exhaust valve closing timing so that a compression pressure agrees with the computed optimal compression pressure, and controls a fuel injection timing so that a cylinder maximum pressure agrees with the computed optimal cylinder maximum pressure.

When the actual opening of the exhaust gas bypass control valve deviates from the order value, for instance, because of aged deterioration, and the scavenging air pressure drops, or when the seat wear regarding the exhaust valve takes place, then the engine performance becomes worse due to the lowered level of the scavenging air pressure. Thus, when the exhaust gas bypass control valve is controlled so that the cylinder compression pressure Pcomp stays at a prescribed level, the scavenging air pressure can be controlled. In this way, the actual engine operation condition can be prevented from deviating from the optimal operating condition.

By use of the exhaust gas energy recovery device described herein, the scavenging air pressure can be determined based on the value detected by each of the engine load detecting sensor, the speed detecting sensor and the scavenging air pressure detecting sensor, so that the engine performance (the fuel consumption rate) is optimal; thus, the scavenging air pressure can be controlled so as to continuously maintain the engine performance at the optimal condition.

Hereafter, embodiments of the present invention and background examples will be described in detail with reference to the figures. However, the dimensions, materials, shape, the relative placement and so on of a component described herein shall not be construed as limiting the scope of the invention thereto, unless especially specific mention is made.

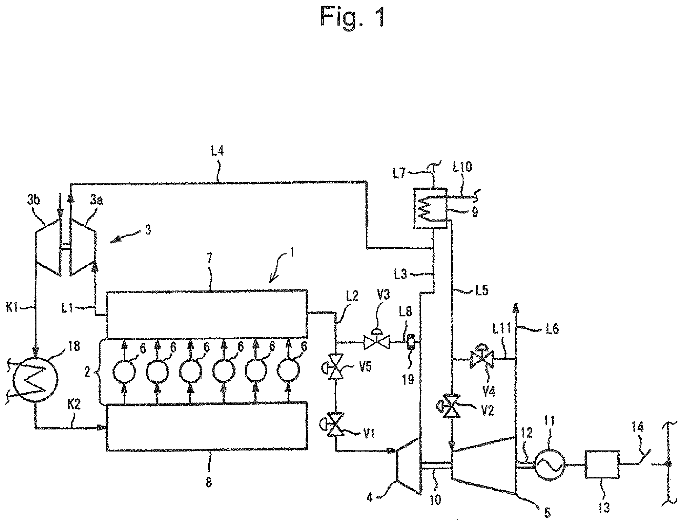

As shown in Fig. 1, a marine diesel engine 1 includes, but not limited to, a diesel engine body (e.g. a body of 2-stroke cycle low speed diesel engine) 2, an exhaust gas manifold 7 of the diesel engine body (hereafter abbreviated as engine body) 2, and a plurality of cylinders 6 in which the fuel injected by at least one fuel injection device (not shown) in the engine body 2 burns (6 cylinders are provided in the 6-cylinder engine in this embodiment).

The numeral 3 denotes an exhaust gas turbocharger that includes, but not limited to, an exhaust gas turbine 3a that is driven by the exhaust gas discharged from the exhaust gas manifold 7; and a compressor 3b that is driven by the exhaust gas turbine 3a via a shaft connecting the exhaust gas turbine 3a and the compressor 3b, the compressor pressurizing the outside air and supplying the pressurized air as scavenging (charging) air to the engine body 2.

The alphanumeric character L1 denotes a first exhaust pipe that connects the exhaust gas manifold 7 to the exhaust gas turbine 3a, the exhaust gas being fed to the exhaust gas turbine 3a through the first exhaust pipe.

The numeral 18 denotes an intercooler that cools the scavenging air (the charging air) that is the outside air compressed at the compressor 3b so as to increase the density of the scavenging air (the charging air).

The alphanumeric character K1 denotes a first charging air pipe that connects the compressor 3b to the intercooler 18; the alphanumeric character K2 denotes a second charging air pipe that connects the intercooler 18 to a charging air manifold 8 which is included in the engine body 2 or is a component of the engine, the scavenging (charging) air cooled at the intercooler being fed into the charging air manifold 8 of the engine body 2.

The numeral 4 denotes a power turbine that is driven by the diverging exhaust gas flow branched from the exhaust gas manifold 7 (toward the exhaust gas turbine), the power turbine 4 being the power source of the generator as described later. The numeral 9 denotes a heat exchanger that generates steam from water by heating the water by use of the heat included in the exhaust gas that has been used for driving the power turbine 4 as well as the exhaust gas turbine 3a of the turbocharger 3. The alphanumeric character L10 denotes a feed water pipe through which water is supplied to the heat exchanger 9. The heat exchanger 9 is a device in which the water supplied through the feed water pipe L10 is guided into the steam generating tubes (not shown) inside the heat exchanger 9 and the water is transformed into steam by use of the heat included in the exhaust gas.

The alphanumeric character L2 denotes a second exhaust pipe that connects the exhaust gas manifold 7 to the power turbine 4; the exhaust gas is fed to the power turbine 4 through the second exhaust pipe L2. The alphanumeric character L3 denotes a third exhaust pipe that connects the power turbine 4 to the heat exchanger 9; the exhaust gas discharged from the power turbine 4 is fed to the heat exchanger 9 through the third exhaust pipe L3. The alphanumeric character L4 denotes a fourth exhaust pipe that connects the exhaust gas turbine 3a of the exhaust gas turbocharger 3 to the third exhaust pipe L3; the exhaust gas discharged from exhaust gas turbine 3a of the turbocharger 3 is fed to the third exhaust pipe L3 so that the exhaust gas streams into the heat exchanger 9. The alphanumeric character L5 denotes a fifth pipe that connects the heat exchanger 9 to a steam turbine 5 that, together with the above-described power turbine 4, becomes a power source of a generator 11; the steam generated at the heat exchanger 9 is fed to the steam turbine 5 through the fifth pipe L5. The alphanumeric character L6 denotes a sixth pipe that returns the steam having driven the steam generator 5 to a condenser (not shown). The alphanumeric character L7 denotes a seventh exhaust pipe that discharges the exhaust gas having been used for generating the steam at the heat exchanger, toward a funnel (not shown), so that the exhaust gas is emitted outboard (or outside.)

In addition, the condensed water condensed in the condenser is fed to the heat exchanger 9 through the feed water pipe L10

The alphanumeric character V1 denotes an exhaust gas flow rate control valve that is provided on a part way of the second exhaust pipe L2; and, a controller (not shown) regulates the opening of the exhaust gas flow rate control valve V1. The alphanumeric character V2 denotes a steam flow rate control valve that is provided on a part way of the fifth pipe L5; and, the controller regulates the opening of steam flow rate control valve V2 so as to control the flow rate of the steam streaming into the steam turbine 5. The alphanumeric character V3 denotes an exhaust gas bypass valve provided on a part way of a first exhaust gas bypass pipe L8 that connects a location of the second exhaust pipe L2 on the upstream of the exhaust gas flow rate control valve V1 to a location on a part way of the third exhaust pipe L3. The alphanumeric character V4 denotes a steam bypass flow rate control valve provided on a part way of a second (steam) bypass pipe L11 that connects a location of the fifth pipe L5 on the upstream of the steam flow rate control valve V2 to a location on a part way of the sixth pipe L6.

The alphanumeric character V5 denotes an emergency control valve provided between the location of the second exhaust pipe L2 from which the first (exhaust gas) bypass pipe L8 is branched and the location of the exhaust gas flow rate control valve V1; the emergency control valve V5 is actuated in a case where the exhaust gas flow into the power turbine 4 is needed to be stopped for some reason.

Further, an orifice is provided between the exhaust gas bypass control valve V3 and the third exhaust pipe L3, namely, at the downstream side of the exhaust gas bypass control valve V3 on a part way of the first (exhaust gas) bypass pipe. The orifice 19 is arranged so that the exhaust gas flow rate through the orifice 19 in a case where the exhaust gas flow rate control valve V1 is fully closed (namely, in a case where the power turbine is at standstill) is the same as the exhaust gas flow rate through the exhaust gas flow rate control valve V1 in a case where the engine body 2 is under a high load condition (e.g. a normal service operation) and the power turbine 4 is at the full load operation condition (namely, the exhaust gas bypass control valve V3 is fully closed and the exhaust gas flow rate control valve V1 is fully opened).

Accordingly, when the engine body 2 is under a high load condition and the power turbine 4 is at standstill, the flow rate of the exhaust gas supplied to the exhaust gas turbocharger increases; as a result, the scavenging air pressure increases. The orifice 19 aims at preventing the scavenging air pressure from exceeding a predetermined pressure level so that the engine operation is not affected.

As described above, the orifice is arranged so that the exhaust gas flow rate (in a case where the exhaust gas flow rate control valve V1 is fully closed) through the orifice 19 is the same as the exhaust gas flow rate through the exhaust gas flow rate control valve V1 in a case where the engine body 2 is under a high load condition (e.g. a normal service operation) and the power turbine 4 is at the full load operation condition. On the other hand, when the exhaust gas flow rate control valve V1 is fully closed, the flow rate of the exhaust gas through the orifice is appropriately small so that the flow rate of the exhaust gas supplied toward the exhaust gas turbocharger 3 is not reduced less than a prescribed level; thus, the pressure of the scavenging air delivered from the exhaust gas turbocharger 3 is prevented from decreasing less than a predetermined level. Hence, the optimal operating conditions regarding the engine body 2 are achieved.

The rotating shaft (not shown) of the power turbine 4 is connected to the rotating shaft (not shown) of the steam turbine 5 via a reduction gear (not shown) and a coupling 10; further, the rotating shaft (not shown) of the steam turbine 5 is connected to the rotating shaft (not shown) of a generator 11 via a reduction gear (not shown) and a coupling 12.

In addition, the generator 11 is electrically connected to a distribution panel 14 provided inboard (in an engine room in this embodiment) apart from other components, via a resistor 13 for control use (a control resistor 13). Thus, the electric power produced by the generator 11 can be used as the inboard electric power source.

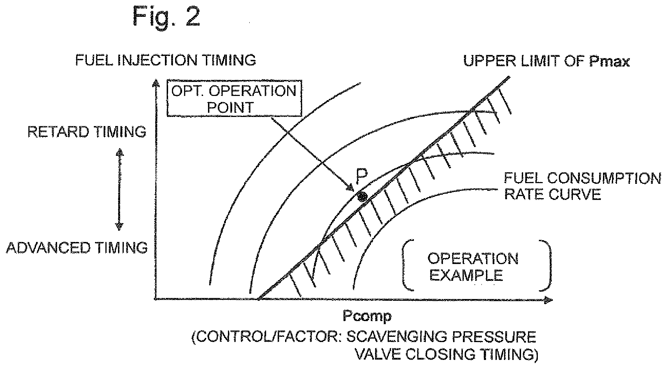

In the next place, with reference to Fig. 2, the control use database for determining the optimal operation conditions so as to achieve a minimal fuel consumption rate is explained, the data base being expressed in the form of what they call map.

The control use database as described in Fig. 2 is an example for the marine 2-stroke cycle engine; based on an engine speed and an engine load, Fig. 2 shows the contour lines regarding fuel consumption rates, the allowable limit line regarding maximum firing pressure and an optimal operating point P, with regard to the cylinder compression pressure (Pcomp) and the fuel injection timing. Thus, there may be a plurality of maps like the map of Fig. 2 in response to the combinations of various engine speeds and engine loads.

The lateral axis shows the compression pressure (in the cylinders); the compression pressure becomes greater in the rightward area in Fig. 2. The vertical axis shows the fuel injection timing; the injection timing is delayed in the upper area in Fig. 2, while the injection timing is advanced in the lower area in Fig. 2.

The control factor may be the scavenging (charging) air pressure, instead of the cylinder compression pressure Pcomp; thereby, there is a relation that the greater scavenging pressure corresponds to the greater the cylinder compression pressure. Further, the control factor may be the exhaust valve closing timing regarding the engine body, instead of the cylinder compression pressure Pcomp; thereby, there is a relation that the earlier closing timing corresponds to the greater cylinder compression pressure. Thus, in a case where the scavenging (charging) air pressure or the exhaust valve closing timing is used as the control factor instead of the cylinder compression pressure Pcomp, the control maps like the map of Fig. 2 can be prepared.

In Fig. 2, on each of the multiple curves, the fuel consumption rate is kept at a constant value; namely, the multiple curves are the contour lines regarding the fuel consumption rate. Further, the locations or the shapes of the multiple contour lines (curved lines) vary in response to the level of the engine speed or the engine load. In relation to the contour lines in Fig. 2, the map indicates that the fuel consumption rate improves in and toward the lower right area (i.e. toward the centers of contour curves curvatures).

Further, in Fig. 2, the thick line shows the upper limit boundary regarding the maximum firing pressure Pmax; in the area on the right side of the upper limit boundary (thick line), the maximum firing pressure exceeds the allowable upper limit in relation to the engine body. Thus, the operation points are not allowed to be in the area on the right side of the upper limit boundary line.

Accordingly, the control target point at which the best fuel consumption rate is achieved exists in the area on the left side of the upper limit boundary line as well as on the lower right side along a contour line regarding a best fuel consumption rate; more concretely, the control target point exists at a point in the neighborhood of (as well as on left side of) the upper limit boundary line regarding the maximum firing pressure, the fuel consumption rate being minimal on the upper limit boundary line (whereby the contour curve passing the optimal point is close to the upper limit boundary line so as to come in contact with the upper limit boundary line).

On the basis of this control target point, the scavenging air pressure, the exhaust valve closing timing and the fuel injection timing are controlled so as to maintain the optimal engine operation condition.

Further, as the load becomes lower, the scavenging pressure becomes lower; accordingly, the cylinder compression pressure decreases. Thus, the fuel injection timing can be advanced. Therefore, the lower the load of the engine is, the lower and the more leftward the optimal operation point is shifted on the upper limit boundary (thick line) regarding the maximum firing pressure in Fig. 2.

Thereby, the contour curves regarding the fuel consumption rate as well as the centers of the contour curves are shifted toward the lower leftward direction along the upper limit boundary (thick line) regarding the maximum firing pressure.

### (First Embodiment)

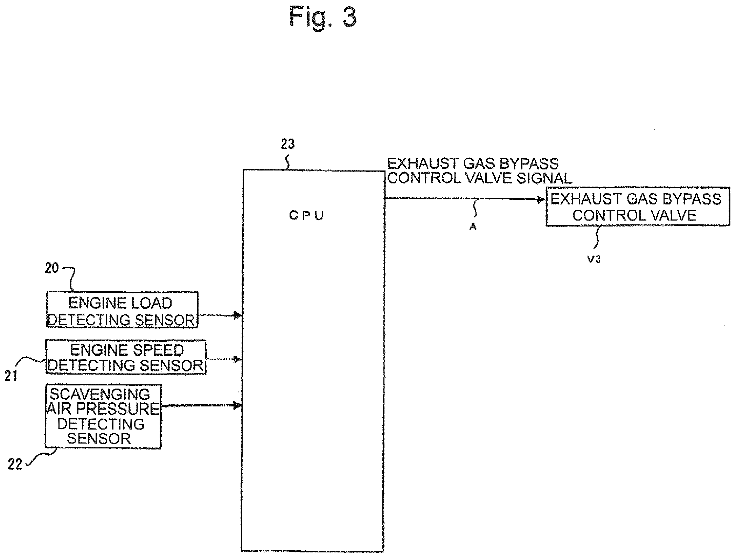

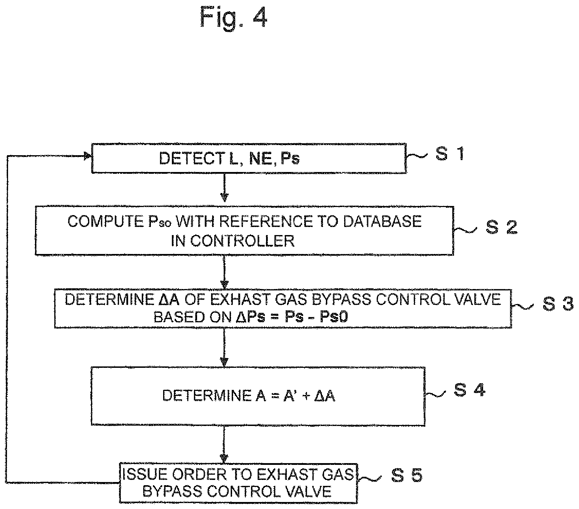

Based on Figs. 3 and 4, the first embodiment of the present invention as to the control method for achieving the optimal engine operation condition (e.g. minimal fuel consumption rate condition) is now explained. Fig. 3 shows a control block diagram according to the first embodiment of the present invention; Fig. 4 shows a control flow chart according to the first embodiment of the present invention.

In Fig. 3, the signals from an engine load detecting sensor 20, an engine speed detection sensor 21 and a scavenging air pressure detecting sensor 22 for detecting the scavenging (charging) air pressure of the engine are inputted into a controller 23 that is a control device in which the controller 23 outputs toward the exhaust gas bypass control valve V3 so as to control the valve V3.

As shown in Fig. 4, in the step S1, the engine load detecting sensor detects the engine load L of the engine 1; the engine speed detecting sensor detects the speed Ne of the engine 1; the scavenging air pressure detecting sensor detects the scavenging air pressure Ps. The engine load L, the engine speed Ne and the scavenging air pressure Ps, as the signals, are inputted into the controller 23. In the following step S2, the controller 23 checks the engine load L and the engine speed Ne against the database that is previously prepared in the controller 23, and computes the optimal scavenging air pressure Ps0 (on the basis of the map in Fig. 2 where the scavenging air pressure is adopted as the lateral axis variable).

In the next place, in the step S3, the controller 23 calculates the difference ΔPs between the scavenging air pressure Ps and the optimal scavenging air pressure Ps0 computed in step S2 so as to determine a to-be-adjusted value ΔA regarding the opening of the exhaust gas bypass control valve V3.

In the following step S4, based on the to-be-adjusted value ΔA and the current opening order value A' , an updated opening order value A regarding the opening of the exhaust gas bypass control valve V3 is determined. In the following step S5, the controller 23 outputs an order regarding the updated opening order value A to regulate the exhaust gas bypass control valve V3. Then, the step S5 is followed by the step S1, and the steps S1 to S5 are repeated. While the steps S1 to S5 are repeated, it is judged whether or not the scavenging air pressure Ps reaches an optimal pressure level Ps0 to maintain the optimal engine operating condition (e.g. minimal fuel consumption rate condition); thereby, when there is a difference between the scavenging air pressure Ps and the optimal pressure level Ps0, the controller works so that the difference is eliminated.

According to the first mode, the control device (the controller) 23 computes the optimal scavenging air pressure Ps0 based on the detected engine load and the detected engine speed so as to achieve the optimal engine operating condition; and, the controller controls the flow rate of the exhaust gas branched toward the power turbine by controlling the opening of the exhaust gas bypass control valve V3, so that the scavenging air pressure Ps agrees with the optimal scavenging air pressure. Thus, the engine is always placed under the optimal operating condition, and the fuel consumption rate is constrained. In this way, the running cost regarding the engine is reduced; consequently, a desirable effect on the reduction of the environmental loads can be achieved.

### (Second Embodiment)

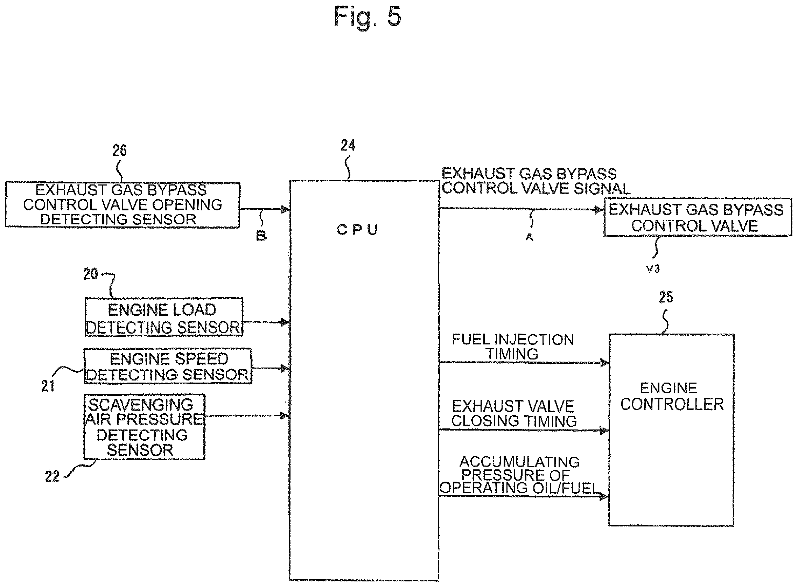

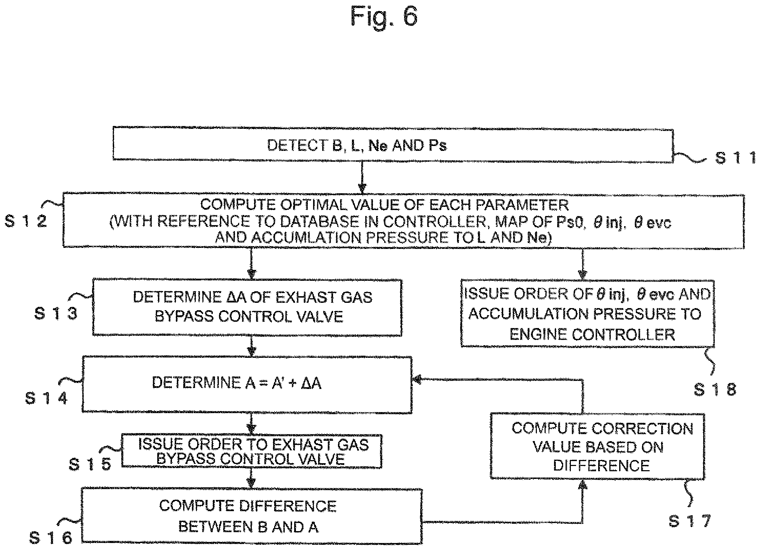

In the next place, based on Figs. 5 and 6, the second embodiment of the present invention as to the control method for achieving the optimal engine operation condition is now explained. It is hereby noted that the first embodiment and the second embodiment relate to the case where the control is performed based on the detection of the scavenging (charging) air pressure, independently of the detection of the pressure (compression pressure or firing pressure) inside the cylinder, whereas, as described later, the third embodiment and the background example relate to the case where the control is performed based on the detection of the pressure inside the cylinder.

Fig. 5 shows a control block diagram according to the second embodiment of the present invention; Fig. 6 shows a control flow chart according to the second embodiment of the present invention.

In Fig. 5, the same component as that in the first embodiment is described with the same numeral or the same alphanumeric character. The point differentiating the second embodiment from the first embodiment is as follows; in the second embodiment, the signals regarding fuel injection timings, the exhaust valve closing timings, the operating oil accumulating pressures (the accumulation pressure regarding the operating oil that drives the fuel pump in an electronic control engine) or the fuel accumulating pressures (the accumulation pressure regarding the fuel in the accumulator of the common rail type fuel injection device) are inputted into an engine controller 25.

In the flow chart of Fig. 6, firstly in the step S11, an exhaust gas bypass control valve opening detecting sensor 26 detects the opening of the exhaust gas bypass control valve, and the signals B regarding the opening are inputted into a controller 24 from the detecting sensor 26. Further, in the step S11, the engine load detecting sensor detects the engine load L of the engine 1; the engine speed detecting sensor detects the speed Ne of the engine 1; the scavenging air pressure detecting sensor detects the scavenging air pressure Ps. The engine load L, the engine speed Ne and the scavenging air pressure Ps, as the signals, are inputted into the controller 24.

Further, in response to the engine load L and the engine speed Ne, a map regarding the optimal scavenging air pressure Ps0, a map regarding the fuel injection timing θinj, a map regarding the exhaust valve closing timing θevc, and a map regarding the operating-oil/fuel accumulation pressure are previously prepared in the controller 24. In the step S12, based on each map, the optimal value regarding each parameter (scavenging air pressure, fuel injection timing, exhaust valve closing timing, and operating-oil/fuel accumulation pressure) corresponding to the map is computed.

More concretely, the map previously prepared in the controller 24 means a map in which the coordinate axes relate to the compression pressure Pcomp and the injection timing θing with regard to various engine loads L and various engine speed Ne as is the case with Fig. 2; in the area regarding the coordinates of the compression pressure Pcomp and the injection timing θing, the contour curves of the fuel consumption rate as well as the upper limit line of the maximum firing pressure Pmax are established as is the case with Fig. 2; the optimal operating point P is established there also as is the case with Fig. 2.

Further, the control factor (parameter) may be the scavenging (charging) air pressure, the exhaust valve closing timing, the operating-oil accumulating pressure (the accumulation pressure regarding the operating oil that drives the fuel pump in an electronic control engine), or the fuel accumulating pressure (the accumulation pressure regarding the fuel in the accumulator of the common rail type fuel injection device), instead of the compression pressure Pcomp of the lateral axis in Fig. 2. Based on each map as just described, the optimal value regarding each parameter is computed.

In the step S13, the controller 24 solves the difference ΔPs between the scavenging air pressure Ps and the optimal scavenging air pressure Ps0 that is computed in step S12; based on the difference ΔPs, the controller 24 determines a to-be-adjusted value ΔA regarding the opening of the exhaust gas bypass control valve V3. In the following step S14, based on the to-be-adjusted value ΔA and the current opening order value A', an updated opening order value A regarding the opening of the exhaust gas bypass control valve V3 is determined. In the following step S15, the controller 24 outputs an order regarding the updated opening order value A to regulate the exhaust gas bypass control valve V3. The step S16 is followed by the step S17 where the difference between the newly detected opening value B regarding the exhaust gas bypass control valve V3, and the updated opening order value A is computed. When there remains a difference (an error) between the value B and the value A, the step S17 is returned to the step S14; based on the error, the correction value is computed, and the correction regarding the opening of the exhaust gas bypass control valve V3 is repeated.

When the current opening value B regarding the exhaust gas bypass control valve V3 agrees with the updated opening order value A, the process of the control returns to the step S11 so that the scavenging air pressure Ps remains at the optimal scavenging air pressure Ps0; thus, the control is repeated.

On the other hand, the step S12 is also followed by the step S18 where the optimal values as the order signals regarding the fuel injection timing θinj, the exhaust valve closing timing θevc and the operating-oil/fuel accumulation pressure are retrieved from the corresponding map; and, the signals are transmitted into an engine controller 25. Thus, the control regarding the engine body 2 is also performed.

As described above, instead of the compression pressure Pcomp (the lateral axis parameter) in Fig.2, the scavenging air pressure, the exhaust valve closing timing, the operating-oil accumulating pressure (the accumulation pressure regarding the operating oil that drives the fuel pump in an electronic control engine), or the fuel accumulating pressure (the accumulation pressure regarding the fuel reservoir of the common rail type fuel injection device) is may be the parameter. More concretely, the map in which the parameter of the lateral axis is the scavenging air pressure, the exhaust valve closing timing, the operating-oil accumulating pressure or the fuel accumulating pressure can be prepared; by use of these maps, in response to the optimal engine operating point P (at which the fuel consumption rate is minimal) established in each of these maps, the optimal value regarding the scavenging air pressure, the exhaust valve closing timing, the operating-oil accumulating pressure or the fuel accumulating pressure is computed; and the optimal value as the signal is outputted.

In the electronic control engine, the accumulation pressure regarding the operating oil that drives the fuel pump, the accumulation pressure regarding the fuel in the accumulator of the common rail type fuel injection device, or the exhaust valve closing timing has an effect directly on the fuel injection pressure. Therefore, the operating-oil accumulating pressure or the fuel injection pressure is maintained at a high level so that, in the cylinders, the fine fuel atomization and the prompt air-fuel mixing are promoted. In this way, the optimal combustion can be achieved; the fuel consumption rate can be reduced owing to the improved thermal efficiency, and the cleaned-up emissions owing to the improved combustion can be achieved. Thus, the desirable results such as the reduction of the environmental loads owing to the cleaned-up emissions can be obtained.

As shown in the steps 14 to 17 of Fig. 6, the opening level of the exhaust gas bypass control valve V3 is detected, and the feedback control regarding the opening is performed. Thus, the deviation of the actual opening level from the ordered opening value can be corrected, the deviation being caused by the aged deterioration or the like; and, the engine operating condition is prevented from deviating from the optimal operating condition.

### (Third Embodiment)

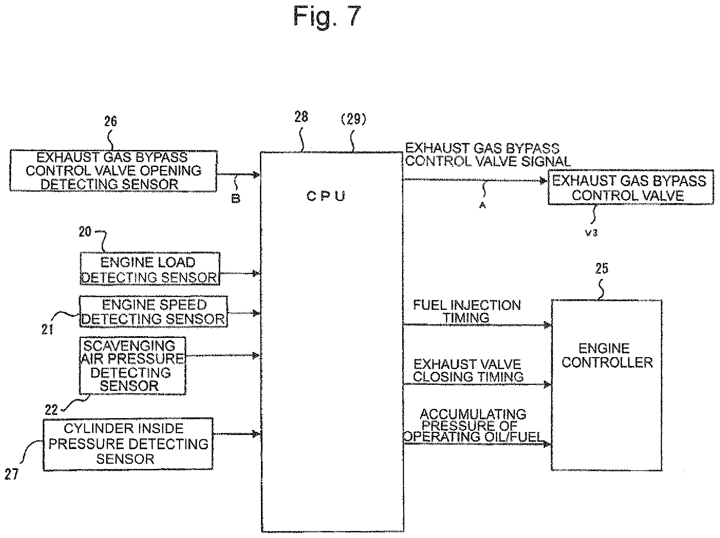

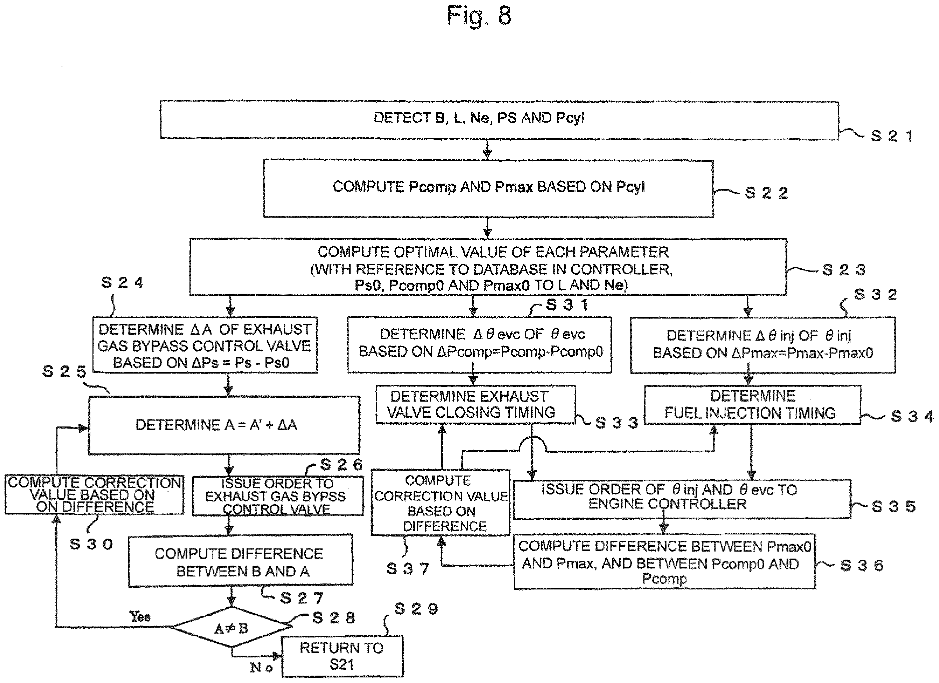

In the next place, based on Figs. 7 and 8, the third embodiment of the present invention as to the control method for achieving the optimal engine operation condition is now explained. Fig. 7 shows a control block diagram, and Fig. 8 shows a control flow chart.

In the control block diagram of Fig. 7, the same component as that in the second embodiment is described with the same numeral or the same alphanumeric character. The point differentiating the third embodiment from the second embodiment is as follows; in the third embodiment, the signals regarding the cylinder pressures detected by a cylinder pressure detecting sensor 27 are inputted into a controller 28.

In the flow chart of Fig. 8, firstly in the step S21, the exhaust gas bypass control valve opening detecting sensor detects the opening of the exhaust gas bypass control valve V3; the signal B regarding the opening is inputted into the controller 28. The engine load detecting sensor detects the engine load L of the engine 1; the signal regarding the load is inputted into the controller 28. The engine speed detecting sensor detects the engine speed Ne of the engine 1; the signal regarding the engine speed Ne is inputted into the controller 28. The scavenging air pressure detecting sensor detects the scavenging air pressure Ps of the engine 1; the signal regarding the scavenging air pressure Ps is inputted into the controller 28. In addition, the cylinder pressure Pcyl (as a transition curve with regard to the crank angle parameter) is detected by the cylinder pressure detecting sensor; the signal regarding the cylinder pressure Pcyl is inputted into the controller 28. Further, in the next step S22, based on the detected cylinder pressure Pcyl (as a transition curve with regard to the crank angle parameter), the cylinder compression pressure Pcomp (the cylinder pressure just before the commencement of combustion or the cylinder compression pressure around the top dead center) and the maximum firing pressure (the maximum cylinder pressure) Pmax are computed.

Further, in response to the engine load L and the engine speed Ne, a map regarding the optimal scavenging air pressure Ps0, a map regarding the optimal compression pressure Pcomp0 and a map regarding the optimal maximum firing pressure Pmax are previously prepared in the controller 28. In the step S23, based on each map, the optimal value regarding each parameter (scavenging air pressure, compression pressure and maximum firing pressure) corresponding to the map is computed.

In the following step S24, the controller 28 calculates the difference ΔPs between the scavenging air pressure Ps and the optimal scavenging air pressure Ps0 that is computed in step S23 so as to determine a to-be-adjusted value ΔA regarding the opening of the exhaust gas bypass control valve V3, based on the difference ΔPs. In the following step S25, based on the to-be-adjusted value ΔA and the current opening order value A', an updated opening order value A regarding the opening of the exhaust gas bypass control valve V3 is determined.

In the step S26, the controller 28 outputs an order regarding the updated opening order value A that is determined in the step S25, to regulate the exhaust gas bypass control valve V3. In the following step S27, the difference between the newly detected opening value B regarding the exhaust gas bypass control valve V3 and the updated opening order value A is computed. In step S28, it is judged whether or not there remains a difference (an error) between the value B and the value. When there remains the difference, the step S28 is followed by the step S30 where the correction value is computed based on the error. The step S30 is returned to the step S25 so that the corrections regarding the opening of the exhaust gas bypass control valve V3 is repeated. When the current opening value B regarding the exhaust gas bypass control valve V3 agrees with the updated opening order value A, the process of the control returns to the step S21 and the control flow is repeated so that the scavenging air pressure Ps remains at the optimal scavenging air pressure Ps0.

On the other hand, in the step S31, based on the difference ΔPcomp between the optimal compression pressure Pcomp0 computed in the step S23 and the cylinder compression pressure Pcomp, a correction value Δθevc regarding the exhaust valve closing timing θevc is determined.

In parallel to the determination of the correction value Δθevc regarding the exhaust valve closing timing in the above-described step S31, in the step S32, based on the optimal maximum firing pressure PmaxO computed in the step S23 and the maximum firing pressure Pmax computed in the step S22, a correction value Δθinj regarding the fuel injection timing θinj is determined.

The step S31 is followed by the step S33 where the exhaust valve closing timing is determined based on the correction value Δθevc regarding the exhaust valve closing timing. The step S32 is followed by the step S34 where the fuel injection timing θinj is determined. In the step S35, the controller 28 issues the correction orders to correct the exhaust valve closing timing θev and the fuel injection timing θinj, toward the engine controller 25. In the step S36, the difference (error) between the target optimal maximum firing pressure PmaxO and the detected maximum firing pressure Pmax, as well as, the difference (error) between the target optimal compression pressure Pcomp0 and the detected compression pressure Pcomp is computed. In the step S37, when there remains the error regarding the compression pressure as well as the maximum firing pressure, the correction value regarding the exhaust valve closing timing θevc as well as the fuel injection timing θinj is computed; the correction value regarding θevc is returned to the step S 33 so as to perform a feedback control, and the correction value regarding θinj is returned to the step S 35 so as to perform a feedback control. Thus, the correction processes are repeated.

In this way, the engine can be optimally operated under further precise optimal operation conditions (e.g. under a minimal fuel consumption condition); namely, further improved fuel consumption rate and further reduced environmental load can be achieved.

Further, the compression pressure is the pressure of the air compressed in the cylinder of the engine; the compression pressure is determined by two factors, namely, the scavenging air pressure and the exhaust valve closing timing. Thus, by enhancing the scavenging (charging) air pressure as well as by delaying the exhaust valve closing timing, the piston up-rising work during the compression stroke can be reduced. Thus, the effect on the reduction of the fuel consumption rate can be obtained. Further, the air temperature in the cylinder at the top dead center of the compression stroke can be reduced. As a result, the NOx (nitrogen oxide) formation through the fuel combustion in the cylinder can be restrained. Hence, the environmental load can be reduced.

Further, as described in relation to the steps from S24 to S27, the change of the scavenging air pressure is successively detected so that the scavenging air pressure becomes the optimal level and the opening regarding the exhaust gas bypass control valve is controlled; and, the flow rate of the exhaust gas fed toward the exhaust gas turbocharger is adjusted. Thus, it becomes possible to adjust the pressure of the scavenging air fed toward the engine body. Thus, the deviation of the actual opening level from the ordered opening value can be corrected, the deviation being caused by the aged deterioration or the like; and, the engine operating condition is prevented from deviating from the optimal operating condition.

Further, the fuel combustion condition becomes a factor for maintaining the optimal operating state of the engine; the fuel combustion condition is influenced by the factors such as the engine speed, the scavenging (charging) air pressure, and the fuel properties (e.g. cetane number, viscosity, contained impurities) and so on. Further, the combustion velocity changes in response to the fuel ignition timing and the fuel atomization level. Thus, as shown in the processes of the steps S31 to S37, when the cylinder pressures (the compression pressure Pcomp and the maximum firing pressure (the maximum combustion pressure) Pmax) are directly detected, as well as, when each of the detected compression pressure Pcomp and the detected maximum firing pressure Pmax agrees with the corresponding optimal value of the optimal point established in the corresponding map in response to the engine operating condition and the engine load so that the control factors such as the opening of the exhaust gas bypass control valve, the fuel injection timing and the exhaust valve closing timing are controlled, then the optimal engine operating condition (e.g. the minimal fuel consumption condition)can be maintained even when the cylinder pressure is reduced due to the change of fuel properties or the aged deterioration.

In addition, instead of the approach that the compression pressure Pcomp and the maximum firing pressure Pmax are controlled so as to achieve the optimal compression pressure and the optimal maximum firing pressure, there can be an approach that the ratio of Pmax/Pcomp is taken as a control factor; thereby, a map for realizing the optimal ratio of Pmax/Pcomp can be prepared in response to the engine load so that the opening of the exhaust gas bypass control valve is controlled.

### (Background Example)

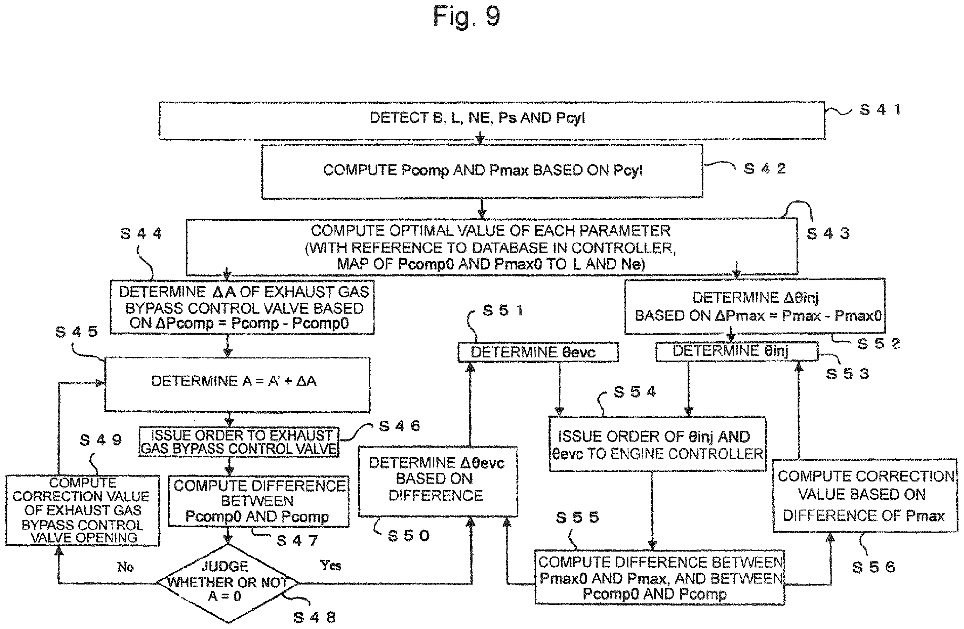

In the next place, based on Figs. 7 and 9, a control method for achieving the optimal engine operation condition according to a background example is now explained. Fig. 7 shows the control block diagram that is the same as the diagram for the third embodiment, and Fig. 9 shows a control flow chart.

In Fig. 9, firstly in the step S41, the engine load detecting sensor detects the engine load L of the engine 1; the signal regarding the load is inputted into the controller 29. The engine speed detecting sensor detects the engine speed Ne of the engine 1; the signal regarding the engine speed Ne is inputted into the controller 29. The scavenging air pressure detecting sensor detects the scavenging air pressure Ps of the engine 1; the signal regarding the scavenging air pressure Ps is inputted into the controller 29. The cylinder pressure Pcyl (as a transition curve with regard to the crank angle parameter) is detected by the cylinder pressure detecting sensor; the signal regarding the cylinder pressure Pcyl is inputted into the controller 29. The exhaust gas bypass control valve opening detecting sensor detects the opening of the exhaust gas bypass control valve V3; the signal regarding the opening is inputted into the controller 29. In the next step S42, based on the detected cylinder pressure Pcyl, the cylinder compression pressure Pcomp and the maximum firing pressure Pmax are computed.

In the following step S43, in reference to the maps (regarding the optimal compression pressure Pcomp0 and the optimal maximum firing pressure PmaxO with regard to the engine load L and the engine speed Ne) previously prepared in the controller 29 the controller 28 calculate, the optimal value of each parameter is computed.

In the following step S44, the controller 29 calculates the difference ΔPcomp between the cylinder compression pressure Pcomp and the optimal cylinder compression pressure Pcomp0; based on the difference ΔPcomp, a to-be-adjusted value ΔA regarding the opening of the exhaust gas bypass control valve V3 is determined. In the following step S45, based on the to-be-adj usted value ΔA and the current opening order value A', an updated opening order value A regarding the opening of the exhaust gas bypass control valve V3 is determined. In the step S46, the controller 29 outputs an order regarding the updated opening order value A that is determined in the step S45, to regulate the exhaust gas bypass control valve V3.

In the step S47, the optimal compression pressure Pcomp0 and the newly detected compression pressure Pcomp are compared; and, the difference (error) between the pressures Pcomp0 and Pcomp is computed. In the following step S48, it is judged whether or not the opening A of the exhaust gas bypass control valve V3 is 0. When the opening A of the exhaust gas bypass control valve V3 is not 0, namely, when the valve is opened, the correction value regarding the opening of the exhaust gas bypass control valve V3 is computed in the step S49, based on the computed error. The result obtained in the step S49 is returned to the step S 45 so as to perform the control regarding the opening A of the exhaust gas bypass control valve V3. On the other hand, when the opening A is equal to 0 in the step S48, namely, when the valve is closed, the correction value Δθevc regarding the exhaust valve closing timing is computed in the step S50, based on the error regarding the cylinder compression pressure Pcomp. Further, in the step S51, the exhaust valve closing timing θevc is determined.

Further, in the step S52, based on the difference between the maximum firing pressure Pmax and the optimal maximum firing pressure PmaxO that is computed in the step S43, the correction value Δθinj regarding the fuel injection timing θinj is determined. In the step S54, the controller 29 outputs the control orders regarding the exhaust valve closing timing θevc determined in the step S51 and the fuel injection timing θinj determined in the step S53, toward the engine controller 25.

In the step S55, the difference (error) between the target optimal maximum firing pressure PmaxO and the detected maximum firing pressure Pmax, as well as, the difference (error) between the target optimal compression pressure Pcomp0 and the detected compression pressure Pcomp is computed.

When the computed result shows that there is a difference between the detected maximum firing pressure Pmax and the target optimal maximum firing pressure PmaxO, then the correction value Δθinj regarding the fuel injection timing θinj is computed in the step S56, based on the error (difference) regarding the maximum firing pressure Pmax. Consequently, the step S56 is returned to the step S 53 where the fuel injection timing θinj is again determined on the basis of the above-described error regarding the maximum firing pressure Pmax, and the signal regarding the determined fuel injection timing is outputted to the engine controller 25.

On the other hand, when there is the difference (error) between the detected compression pressure Pcomp and the target optimal compression pressure PcompO, the step S55 is returned to the step S50 where the correction value regarding the exhaust valve closing timing θevc is computed again, based on the error (difference) regarding the optimal compression pressure Pcαmp0.

In a case where the actual opening level of the exhaust gas bypass control valve is deviated from the order value, so that the scavenging air pressure is reduced, for instance, owing to aged deterioration, or in a case where of the seat surfaces of the exhaust valve wear, the compression pressure is reduced and the engine performance is deteriorated. As shown in the processes of the steps S44 to S48, when the cylinder pressures are directly detected and the exhaust gas bypass control valve is regulated so that the compression pressure Pcomp stays at a predetermined level, the actual engine operating conditions can be prevented from deviating from the optimal operation conditions due to aged deterioration.

In this way, the engine can be optimally operated under further precise optimal operation conditions (e.g. under a minimal fuel consumption condition); namely, further improved fuel consumption rate and further reduced environmental load can be achieved.

Further, as described above, the cylinder pressures (the compression pressure Pcomp and the maximum firing pressure (the maximum combustion pressure) Pmax) are directly detected; the control factors such as the opening of the exhaust gas bypass control valve, the fuel injection timing and the exhaust valve closing timing are controlled so that the detected compression pressure Pcomp agrees with the target optimal value regarding the compression pressure and the detected maximum firing pressure Pmax agrees with the target optimal value regarding the maximum firing pressure, each optimal value being described in the corresponding map with an optimal engine operation point, each map being related to the engine load. In this way, the optimal operation (minimal fuel consumption operation) of the engine can be maintained, even when the properties of fuel change.

Further, even in a case where the exhaust gas bypass control valve V3 is fully closed and the opening is 0, the compression pressure Pcomp can be controlled toward the optimal compression pressure PcompO, by regulating the exhaust valve closing timing. Thus, the optimal control regarding the control parameter (factor) can be surly performed.

Further, in the above-described embodiments and background example, the exhaust gas energy recovery device as a concrete example is provided with one turbocharger 3, one power turbine 4, and one steam turbine 5. However, the present invention is not limited to the configuration of the described embodiments. For instance, two turbochargers 3 may be provided; the power turbine may be provided with, for instance, a variable geometry nozzle device that is of a rotation speed control type and adjusts the flow rate of the exhaust gas streaming into the power turbine on the inlet side of the exhaust gas.

Further, each of the power turbine 4 and the steam turbine can be operated, not in stages, by the manner in which the exhaust gas flow rate control valve V1, the steam flow rate control valve V2, the exhaust gas bypass control valve V3 and the steam bypass flow rate control valve V4 are precisely adjusted. Accordingly, the span of adjustable range regarding the power output of the generator 13 can be extended. Thus, the capacity of the control resistor 13 (a resistor for control use) can be restrained and the control resistor of a compact size can be adopted even in a case where the electric power demand inboard greatly changes. Thus, the cost effective control-resistor can be selected.

### Industrial Applicability

According to the present invention, the energy included in the exhaust gas emitted from the engine is recovered via the power turbine and the steam turbine, the power turbine and the steam turbine being connected in series via a coupling and a reduction gear, the power turbine and the steam turbine driving a generator so as to supply electricity inboard. The recovered energy can be used for driving a compressor so as to accumulate compressed air in air tanks, the air tank being able to be a power source for air actuators.

## Claims

1. An engine exhaust gas energy recovery device comprising:
an exhaust gas turbocharger (3) comprising a turbine (3a) and a compressor (3b), the turbine (3a) arranged to be driven by the exhaust gas discharged from the engine (1), the compressor (3b) being arranged to compression-transport outside air to the engine body (2) by being driven by the turbine;
a first exhaust pipe (L1) connecting the exhaust gas turbocharger (3) to an exhaust manifold (7) of the engine (1);
a power turbine (4) arranged to be driven by the exhaust gas;
a second exhaust pipe (L2) connecting the exhaust manifold (7) to the power turbine (4);
a gas flow-rate control valve (V1) being provided on the way of the second exhaust pipe (L2) so as to control the flow-rate of the exhaust gas fed to the power turbine (4);
a bypass pipe (L8) connected to the second exhaust pipe (L2) and provided on the upstream side of the gas-flow rate control valve (V1) so as to bypass the power turbine (4);
an exhaust gas bypass control valve (V3) which is provided on the way of the bypass pipe (L8) and arranged to control the flow-rate of exhaust gas bypassing the power turbine (4);
an engine load detecting sensor (20) arranged to detect the load of the engine (1);
an engine speed detecting sensor (21) arranged to detect the speed of the engine (1); and
**characterised by** further comprising:
an orifice (19) provided part way along the bypass pipe (L8) and on the downstream side of the exhaust gas bypass control valve (V3);
a scavenging air pressure detecting sensor (22) arranged to detect the scavenging air pressure of the engine (1); and
a control device (23) arranged to compute, using a database, the optimal scavenging air pressure at which a fuel consumption rate of the engine (1) becomes the optimum operating state on the basis of each value detected by the engine load detecting sensor (20) and the engine speed detecting sensor (21), such that the respective fuel consumption rate of the engine (1) corresponding to each computed optimal scavenging air pressure is the minimum fuel consumption rate condition at each of the detected values,
wherein the control device (23) is arranged to control the exhaust gas bypass control valve (V3) so that the detected scavenging air pressure agrees with the computed optimal scavenging air pressure.

2. The engine exhaust gas energy recovery device according to claim 1, wherein the orifice (19) is arranged so that an exhaust gas flow rate through the orifice (19) in a case where the exhaust gas flow rate control valve (V1) is fully closed is the same as an exhaust gas flow rate through the exhaust gas flow rate control valve (V1) in a case where the exhaust gas bypass control valve (V3) is fully closed and the exhaust gas flow rate control valve is fully opened.

3. The engine exhaust gas energy recovery device according to claim 1 or claim 2, wherein the control device (23) further comprises a map arranged to compute the optimal injection timing of a fuel injection device when the fuel consumption rate of the engine (1) becomes the optimum operating state on the basis of each value detected by the engine load detecting sensor (20) and the engine speed detecting sensor (21), the control device (23) being arranged to control an injection timing of the fuel injection device with reference to the map.

4. The engine exhaust gas energy recovery device according to claim 1 or claim 2, wherein the control device (23) further comprises a map arranged to compute the optimal closing timing of an exhaust valve of the engine (1) when the fuel consumption rate of the engine (1) becomes the optimum operating state on the basis of each value detected by the engine load detecting sensor (20) and the engine speed detecting sensor (21), the control device (23) being arranged to control a closing timing of the exhaust valve with reference to the map.

5. The engine exhaust gas energy recovery device according to claim 1 or claim 2,
the engine (1) comprising either an operating oil accumulation room for a fuel-pump operating oil or a fuel accumulation room for a common-rail type fuel injection system,
the control device (23) further comprising a map arranged to compute either an operating oil accumulation pressure or a fuel accumulation pressure when a fuel consumption rate of the engine (1) becomes the optimum operating state on the basis of each value detected by the engine load detecting sensor (20) and the engine speed detecting sensor (21),
wherein the control device (23) is arranged to control either the operating oil accumulation pressure or the fuel accumulation pressure with reference to the map.

6. The engine exhaust gas energy recovery device according to claim 1 or claim 2,
wherein the control device (23) is arranged to feed back an opening of the exhaust gas bypass control valve (V3) so that the opening of the exhaust gas bypass control valve (V3) agrees with a target bypass control valve opening which is calculated in a manner that a fuel consumption rate becomes the optimum
operating state on the basis of a signal given by an exhaust gas bypass control valve opening detecting sensor (26) which is arranged to detect an opening of the exhaust gas bypass control valve (V3).

7. The engine exhaust gas energy recovery device according to claim 1 or claim 2, wherein:
the control device (23) is arranged to compute a cylinder compression pressure, Pcomp, and a maximum pressure, Pmax, on the basis of a cylinder pressure detected by a cylinder pressure detecting sensor (27);
the control device (23) is arranged to preliminarily set, as a map, an optimal compression pressure, PcompO, and an optimal maximum pressure, PmaxO, so that a fuel consumption rate agrees with the optimal value with regard to the engine load and the engine speed;
the control device (23) is arranged to control a fuel injection timing so that the computed maximum pressure Pmax agrees with the value obtained from the map; and
the control device (23) is arranged to control the exhaust valve closing timing so that the computed compression pressure Pcomp agrees with the value obtained from the map.

## Patentansprüche

1. Vorrichtung zur Rückgewinnung der Abgasenergie eines Motors, umfassend:
einen Abgasturbolader (3) umfassend eine Turbine (3a) und einen Verdichter (3b), wobei die Turbine (3a) eingerichtet ist, von dem von dem Motor (1) abgegebenen Abgas angetrieben zu werden, wobei der Verdichter (3b) eingerichtet ist, Luft von außen zu dem Motorkörper (2) komprimiert zu transportieren, indem er von der Turbine angetrieben wird;
ein erstes Auspuffrohr (L1), welches den Abgasturbolader (3) mit einem Auspuffkrümmer (7) des Motors (1) verbindet;
eine Leistungsturbine (4), welche eingerichtet ist, von dem Abgas angetrieben zu werden;
ein zweites Auspuffrohr (L2), welches den Auspuffkrümmer (7) mit der Leistungsturbine (4) verbindet;
ein Gasdurchflussregelventil (V1), welches auf dem Weg des zweiten Auspuffrohrs (L2) bereitgestellt wird, sodass es den Durchfluss des Abgases regelt, welches in die Leistungsturbine (4) gespeist wird;
ein Überbrückungsrohr (L8), welches mit dem zweiten Auspuffrohr(L2) verbunden und auf der Anströmseite des Gasdurchflussregelventils (V1) bereitgestellt ist, sodass die Leistungsturbine (4) überbrückt wird;
ein Abgasüberbrückungsregelventil (V3), welches auf dem Weg des Überbrückungsrohrs (L8) bereitgestellt wird, sodass es den Durchfluss von Abgas regelt, welches die Leistungsturbine (4) überbrückt;
einen Motorbelastungserkennungssensor (20), welcher eingerichtet ist, die Belastung des Motors (1) zu erkennen;
einen Motordrehzahlerkennungssensor (21), welcher eingerichtet ist, die Drehzahl des Motors (1) zu erkennen; und
**dadurch gekennzeichnet, dass** sie weiter umfasst:
eine Öffnung (19), welche teilweise entlang des Überbrückungsrohrs (L8) und auf der Abströmseite des Abgasüberbrückungsregelventils (V3) bereitgestellt ist;
einen Spülluftdruckerkennungssensor (22), welcher eingerichtet ist, den Spülluftdruck des Motors (1) zu erkennen; und
eine Regelvorrichtung (23), welche eingerichtet ist, unter Verwendung einer Datenbank den optimalen Spülluftdruck zu berechnen, bei dem eine Kraftstoffverbrauchsrate des Motors (1) der optimale Betriebszustand auf Basis eines jeden Wertes wird, welcher von dem Motorbelastungserkennungssensor (20) und dem Motordrehzahlerkennungssensor (21) erkannt wird, sodass die entsprechende Kraftstoffverbrauchsrate des Motors (1), welche jedem berechneten optimalen Spülluftdruck entspricht, die minimale Kraftstoffverbrauchsratenbedingung bei jedem von den erkannten Werten ist,
wobei die Regelvorrichtung (23) eingerichtet ist, das Abgasüberbrückungsregelventil (V3) zu steuern, sodass der erkannte Spülluftdruck mit dem berechneten optimalen Spülluftdruck übereinstimmt.

2. Vorrichtung zur Rückgewinnung der Abgasenergie eines Motors nach Anspruch 1, wobei die Öffnung (19) eingerichtet ist, sodass ein Abgasdurchfluss durch die Öffnung (19) in einem Fall, in dem das Abgasdurchflussregelventil (V1) vollständig geschlossen ist, derselbe ist wie ein Abgasdurchfluss durch das Abgasdurchflussregelventil (V1) in einem Fall, in dem das Abgasüberbrückungsregelventil (V3) vollständig geschlossen und das Abgasdurchflussregelventil vollständig geöffnet ist.

3. Vorrichtung zur Rückgewinnung der Abgasenergie eines Motors nach Anspruch 1 oder Anspruch 2, wobei die Regelvorrichtung (23) weiter eine Karte umfasst, welche eingerichtet ist, den optimalen Einspritzzeitpunkt einer Kraftstoffeinspritzvorrichtung zu berechnen, wenn die Kraftstoffverbrauchsrate des Motors (1) der optimale Betriebszustand auf Basis eines jeden Wertes wird, welcher von dem Motorbelastungserkennungssensor (20) und dem Motordrehzahlerkennungssensor (21) erkannt wird, wobei die Regelvorrichtung (23) eingerichtet ist, einen Einspritzzeitpunkt der Kraftstoffeinspritzvorrichtung mit Bezug auf die Karte zu regeln.

4. Vorrichtung zur Rückgewinnung der Abgasenergie eines Motors nach Anspruch 1 oder Anspruch 2, wobei die Regelvorrichtung (23) weiter eine Karte umfasst, welche eingerichtet ist, den optimalen Schließungszeitpunkt eines Abgasventils des Motors (1) zu berechnen, wenn die Kraftstoffverbrauchsrate des Motors (1) der optimale Betriebszustand auf Basis eines jeden Wertes wird, welcher von dem Motorbelastungserkennungssensor (20) und dem Motordrehzahlerkennungssensor (21) erkannt wird, wobei die Regelvorrichtung (23) eingerichtet ist, einen Schließungszeitpunkt des Abgasventils mit Bezug auf die Karte zu regeln.

5. Vorrichtung zur Rückgewinnung der Abgasenergie eines Motors nach Anspruch 1 oder Anspruch 2,
wobei der Motor (1) entweder einen Betriebsölsammelraum für ein Betriebsöl einer Kraftstoffpumpe oder einen Kraftstoffsammelraum für ein Common Rail-Kraftstoffeinspritzsystem umfasst,
wobei die Regelvorrichtung (23) weiter eine Karte umfasst, welche eingerichtet ist, entweder einen Betriebsölsammeldruck oder einen Kraftstoffsammeldruck zu berechnen, wenn eine Kraftstoffverbrauchsrate des Motors (1) der optimale Betriebszustand auf Basis eines jeden Wertes wird, welcher von dem Motorbelastungserkennungssensor (20) und dem Motordrehzahlerkennungssensor (21) erkannt wird,
wobei die Regelvorrichtung (23) eingerichtet ist, entweder den Betriebsölsammeldruck oder den Kraftstoffsammeldruck mit Bezug auf die Karte zu regeln.

6. Vorrichtung zur Rückgewinnung der Abgasenergie eines Motors nach Anspruch 1 oder Anspruch 2,
wobei die Regelvorrichtung (23) eingerichtet ist, eine Öffnung des Abgasüberbrückungsregelventils (V3) zurückzumelden, sodass die Öffnung des Abgasüberbrückungsregelventils (V3) mit einer angestrebten Öffnung des Überbrückungsregelventils übereinstimmt, welche auf eine Weise berechnet wird, dass eine Kraftstoffverbrauchsrate der optimale Betriebszustand auf Basis eines Signals wird,
welches von einem Abgasüberbrückungsregelventilöffnungserkennungssensor (26) abgegeben wird, welcher eingerichtet ist, eine Öffnung des Abgasüberbrückungsregelventils (V3) zu erkennen.

7. Vorrichtung zur Rückgewinnung der Abgasenergie eines Motors nach Anspruch 1 oder Anspruch 2, wobei:
die Regelvorrichtung (23) eingerichtet ist, einen Zylinderkompressionsdruck, Pcomp, und einen Maximaldruck, Pmax, auf Basis eines Zylinderdrucks zu berechnen, welcher von einem Zylinderdruckerkennungssensor (27) erkannt wird;
die Regelvorrichtung (23) eingerichtet ist, vorläufig, als eine Karte, einen optimalen Kompressionsdruck, PcompO, und einen optimalen Maximaldruck, PmaxO, festzulegen, sodass eine Kraftstoffverbrauchsrate mit dem optimalen Wert mit Bezug auf die Motorbelastung und die Motordrehzahl übereinstimmt;
die Regelvorrichtung (23) eingerichtet ist, einen Kraftstoffeinspritzzeitpunkt zu regeln, sodass der berechnete Maximaldruck Pmax mit dem von der Karte erhaltenen Wert übereinstimmt; und
die Regelvorrichtung (23) eingerichtet ist, den Abgasventilschließungszeitpunkt zu regeln, sodass der berechnete Kompressionsdruck Pcomp mit dem von der Karte erhaltenen Wert übereinstimmt.

## Revendications

1. Dispositif de récupération d'énergie de gaz d'échappement de moteur comprenant :
un turbocompresseur de gaz d'échappement (3) comprenant une turbine (3a) et un compresseur (3b), la turbine (3a) étant agencée pour être entraînée par les gaz d'échappement évacués du moteur (1), le compresseur (3b) étant agencé pour le transport par compression d'air extérieur au corps de moteur (2) en étant entraîné par la turbine ;
un premier tuyau d'échappement (L1) raccordant le turbocompresseur de gaz d'échappement (3) à un collecteur d'échappement (7) du moteur (1) ;
une turbine de puissance (4) agencée pour être entraînée par les gaz d'échappement ;
un second tuyau d'échappement (L2) raccordant le collecteur d'échappement (7) à la turbine de puissance (4) ;
une vanne de commande de débit de gaz (V1) étant prévue sur le chemin du second tuyau d'échappement (L2) de sorte à commander le débit des gaz d'échappement fournis à la turbine de puissance (4) ;
un tuyau de dérivation (L8) raccordé au second tuyau d'échappement (L2) et prévu sur le côté en amont de la vanne de commande de débit de gaz (V1) de sorte à contourner la turbine de puissance (4) ;
une vanne de commande de dérivation de gaz d'échappement (V3) qui est prévue sur le chemin du tuyau de dérivation (L8) et agencée pour commander le débit des gaz d'échappement contournant la turbine de puissance (4) ;
un capteur de détection de charge de moteur (20) agencé pour détecter la charge du moteur (1) ;
un capteur de détection de vitesse de moteur (21) agencé pour détecter la vitesse du moteur (1) ; et
**caractérisé en ce qu'**il comprend en outre :
un orifice (19) prévu à mi-chemin le long du tuyau de dérivation (L8) et sur le côté en aval de la vanne de commande de dérivation de gaz d'échappement (V3) ;
un capteur de détection de pression d'air de balayage (22) agencé pour détecter la pression d'air de balayage du moteur (1) ; et
un dispositif de commande (23) agencé pour calculer, en utilisant une base de données, la pression d'air de balayage optimale à laquelle un taux de consommation de carburant du moteur (1) devient l'état opérationnel optimum sur la base de chaque valeur détectée par le capteur de détection de charge de moteur (20) et le capteur de détection de vitesse de moteur (21), de sorte que le taux de consommation de carburant respectif du moteur (1) correspondant à chaque pression d'air de balayage optimale calculée soit la condition de taux de consommation de carburant minimum sur chacune des valeurs détectées,
dans lequel le dispositif de commande (23) est agencé pour commander la vanne de commande de dérivation de gaz d'échappement (V3) de sorte que la pression d'air de balayage détectée concorde avec la pression d'air de balayage calculée.

2. Dispositif de récupération d'énergie de gaz d'échappement de moteur selon la revendication 1, dans lequel l'orifice (19) est agencé de sorte qu'un débit de gaz d'échappement au travers de l'orifice (19) dans un cas où la vanne de commande de débit de gaz d'échappement (V1) est complètement fermée soit le même qu'un débit de gaz d'échappement au travers de la vanne de commande de débit de gaz d'échappement (V1) dans un cas où la vanne de commande de dérivation de gaz d'échappement (V3) est complètement fermée et la vanne de commande de débit de gaz d'échappement est complètement ouverte.

3. Dispositif de récupération d'énergie de gaz d'échappement de moteur selon la revendication 1 ou 2, dans lequel le dispositif de commande (23) comprend en outre une carte agencée pour calculer le calage d'injection optimale d'un dispositif d'injection de carburant lorsque le taux de consommation de carburant du moteur (1) devient l'état opérationnel optimum sur la base de chaque valeur détectée par le capteur de détection de charge de moteur (20) et le capteur de détection de vitesse de moteur (21), le dispositif de commande (23) étant agencé pour commander un calage d'injection du dispositif d'injection de carburant en référence à la carte.

4. Dispositif de récupération d'énergie de gaz d'échappement de moteur selon la revendication 1 ou 2, dans lequel le dispositif de commande (23) comprend en outre une carte agencée pour calculer le calage de fermeture optimale d'une vanne d'échappement du moteur (1) lorsque le taux de consommation de carburant du moteur (1) devient l'état opérationnel optimum sur la base de chaque valeur détectée par le capteur de détection de charge de moteur (20) et le capteur de détection de vitesse de moteur (21), le dispositif de commande (23) étant agencé pour commander un calage de fermeture de la vanne d'échappement en référence à la carte.

5. Dispositif de récupération d'énergie de gaz d'échappement de moteur selon la revendication 1 ou 2,
le moteur (1) comprenant soit une chambre d'accumulation d'huile de fonctionnement pour une huile de fonctionnement de pompe à carburant, soit une chambre d'accumulation de carburant pour un système d'injection de carburant de type à rampe commune,
le dispositif de commande (23) comprenant en outre une carte agencée pour calculer soit une pression d'accumulation d'huile de fonctionnement, soit une pression d'accumulation de carburant lorsqu'un taux de consommation de carburant du moteur (1) devient l'état opérationnel optimum sur la base de chaque valeur détectée par le capteur de détection de charge de moteur (20) et le capteur de détection de vitesse de moteur (21),
dans lequel le dispositif de commande (23) est agencé pour commander soit la pression d'accumulation d'huile de fonctionnement, soit la pression d'accumulation de carburant en référence à la carte.

6. Dispositif de récupération d'énergie de gaz d'échappement de moteur selon la revendication 1 ou 2,
dans lequel le dispositif de commande (23) est agencé pour renvoyer une ouverture de la vanne de commande de dérivation de gaz d'échappement (V3) de sorte que l'ouverture de la vanne de commande de dérivation de gaz d'échappement (V3) concorde avec une ouverture de vanne de commande de dérivation cible qui est calculée de telle manière qu'un taux de consommation de carburant devienne l'état opérationnel optimum sur la base d'un signal donné par un capteur de détection d'ouverture de vanne de commande de dérivation de gaz d'échappement (26) qui est agencé pour détecter une ouverture de la vanne de commande de dérivation de gaz d'échappement (V3).

7. Dispositif de récupération d'énergie de gaz d'échappement de moteur selon la revendication 1 ou 2, dans lequel :
le dispositif de commande (23) est agencé pour calculer une pression de compression de cylindre, Pcomp, et une pression maximum, Pmax, sur la base d'une pression de cylindre détectée par un capteur de détection de pression de cylindre (27) ;
le dispositif de commande (23) est agencé pour définir de manière préliminaire, en tant que carte, une pression de commande optimale, PcompO, et une pression maximum optimale, PmaxO, de sorte qu'un taux de consommation de carburant concorde avec la valeur optimale en ce qui concerne la charge de moteur et la vitesse de moteur ;
le dispositif de commande (23) est agencé pour commander un calage d'injection de carburant de sorte que la pression maximum calculée Pmax concorde avec la valeur obtenue à partir de la carte ; et
le dispositif de commande (23) est agencé pour commander le calage de fermeture de vanne d'échappement de sorte que la pression de compression calculée Pcomp concorde avec la valeur obtenue à partir de la carte.
